# EUROPEAN PATENT SPECIFICATION

(11) **EP 3 627 004 B1**
(45) Date of publication and mention of the grant of the patent: **03.08.2022**
(21) Application number: 19197446.8
(22) Date of filing: 16.09.2019
(51) Int. Cl.: F16H 61/00, F16H 57/04

(54) **HYDRAULIC DEVICE FOR TRANSMISSION LUBRICATION AND CLUTCH COOLING FOR A MOTOR VEHICLE**
HYDRAULISCHE VORRICHTUNG ZUR GETRIEBESCHMIERUNG UND KUPPLUNGSKÜHLUNG FÜR EIN KRAFTFAHRZEUG
DISPOSITIF HYDRAULIQUE POUR LUBRIFICATION DE TRANSMISSION ET REFROIDISSEMENT D'EMBRAYAGE DE VÉHICULE À MOTEUR

(30) Priority: 21.09.2018 DE 102018007462
(43) Date of publication of application: 25.03.2020
(73) Proprietor: FTE automotive GmbH, 96106 Ebern (DE)
(72) Inventor: HEUBNER, Wilhelm, D-96106 Ebern (DE)
(74) Representative: Valeo Powertrain Systems

(56) References cited:
- US-A1- 2014 234 124
- US-A1- 2014 291 101

## Description

### TECHNICAL FIELD

The present invention relates to a hydraulic device for transmission lubrication and clutch cooling for a motor vehicle, according to the preamble of claim 1. In particular, the invention relates to such a device as now commonly used in the automotive industry in conventionally driven motor vehicles with dual clutch transmission or in hybrid vehicles.

### PRIOR ART

A motor vehicle requires continuous lubrication at the transmission parts which are in mutual engagement under relative movement, in particular gearwheels, and also a cooling system for the clutch in the case when a wet clutch or several wet clutches is/are used. If it is possible to cool the wet clutch only when required, drag losses in the open clutch can be avoided.

In this connection, publication DE 11 2008 000 438 B4 discloses a hydraulic system for controlling a dual clutch transmission working with wet clutches in a motor vehicle with an internal combustion engine. This hydraulic system comprises a pump driven by the internal combustion engine to provide a system pressure in a supply line, a control valve device for individually loading clutch actuators with an actuation pressure derived from the system pressure and modulated as a function of operating states, and a system valve which, when the system pressure is reached, conducts hydraulic fluid delivered by the pump into a return line. The return line here contains a cooling control valve which can be actuated by an electronic control device for controlling the quantity of hydraulic fluid supplied to the clutches.

The quantity of hydraulic fluid required for supplying the clutch actuators is however much smaller than the quantity of hydraulic fluid required to cover the maximum cooling demand. Also, at high rotation speeds of the internal combustion engine, significantly more hydraulic fluid is delivered than is required. To keep flow losses very low, correspondingly large line cross-sections must be provided.

To avoid the drawbacks outlined above, in this prior art an electrically driven auxiliary pump is provided for conveying cooling fluid to the clutches as required, wherein the hydraulic fluid flowing through the return line can be supplied directly to the clutches for cooling. The proposed circuit arrangement with the system valve, cooling control valve and additional auxiliary pump however leads to a considerable complexity of equipment.

Publication CN 107965565 A discloses a hydraulic lubrication system for an automatic transmission with wet clutches, as used in particular in hybrid vehicles. The previously known hydraulic lubrication system has a pump with a conveying direction, by means of which hydraulic fluid for cooling several clutches and for lubricating the transmission can be delivered from a storage container into a common pressure line. The lubricating system comprises a plurality of proportional valves for dividing and metering the required hydraulic fluid into individual partial volume flows for cooling the various clutches or for lubricating the transmission; said proportional valves are connected in parallel with each other and divert the partial volume flow required for the respective components (clutch or transmission) from the common pressure line. Furthermore, a changeover valve, via which the pressure line can be connected to the storage container, is provided for hydraulic pressure relief of the lubrication system.

The multiplicity of valves and their electrical actuation also requires very great complexity of equipment in this prior art, and is also regarded as unfavourable in energy terms.

Publication US 2014/234124 A1 discloses the preamble of the claim 1.

### OUTLINE OF OBJECT

The invention is based on the object of creating a hydraulic device for clutch cooling and transmission lubrication for a motor vehicle which avoids the above disadvantages and in particular is configured more simply and consumes less energy in operation than the outlined prior art.

### DEPICTION OF THE INVENTION

This object is achieved by a hydraulic device for transmission lubrication and clutch cooling for a motor vehicle, with the features of claim 1. Advantageous embodiments of the invention are the subject of the subclaims.

In a hydraulic device for transmission lubrication and clutch cooling in a motor vehicle, with a pump having two pump ports for conveying a hydraulic fluid (namely oil), a suction inlet for drawing in the hydraulic fluid from a storage container, a first outlet for the output of hydraulic fluid for transmission lubrication, a second outlet for the output of hydraulic fluid for clutch cooling, and a valve arrangement for conducting the hydraulic fluid from the suction inlet to the outlets, according to the invention the pump is configured as a reversing pump so that, depending on the rotation direction of the pump, the one pump port lies on the suction side and the other pump port lies on the pressure side, wherein the valve arrangement comprises at least four check valves which are arranged between the pump ports, the suction inlet and the outlets such that the hydraulic fluid can only be drawn in via the suction inlet on the suction side and can only be output on the pressure side in the direction of the outlets, and wherein the outlets are hydraulically connected by means of a connecting portion having a diaphragm and a check valve which blocks in the direction of the second outlet, so that depending on the rotation direction of the pump, transmission lubrication or combined clutch cooling and transmission lubrication takes place.

Therefore only one pump is required, namely a reversing pump, in order to guarantee continuous transmission lubrication and also to provide a cooling path for cooling at least one clutch with hydraulic fluid as required. According to the invention, the hydraulic fluid is conducted from the storage container through the hydraulic device to the outlets for transmission lubrication or clutch cooling in an energetically highly favourable fashion, by a simple change of rotation direction for the reversing pump in combination with intelligent switching of the at least four check valves of the valve arrangement.

The respective route of the hydraulic fluid through the hydraulic device arises automatically because of the preselected rotation direction of the reversing pump, wherein no sensors are required to detect the position of valves or similar in order to draw conclusions about the route of the hydraulic fluid through the hydraulic device. The equipment complexity for conveying and conducting the hydraulic fluid through the hydraulic device is therefore also very low, since no complicated switching devices are required for distributing the hydraulic fluid flow, nor any electromagnetically actuatable proportional or changeover valves or similar, merely simple check valves.

In the case when a constant pump is used as a reversing pump, by controlling the rotation speed of the pump drive, furthermore the delivery quantity of hydraulic fluid required for the respective lubrication or cooling task can conceivably be set easily, wherein an (also) energetically unfavourable over-supply is avoided.

In total, with the hydraulic device according to the invention, the energy balance is better and the equipment complexity lower than in the prior art described above.

In a suitable embodiment of the invention, a respective suction line portion lies between the suction inlet and each of the pump ports, and contains a check valve of the valve arrangement which blocks in the direction of the suction inlet.

According to the invention, a first pressure line portion lies between a first of the pump ports and the first outlet for transmission lubrication, and contains a check valve of the valve arrangement which blocks in the direction of the first pump port. In addition, a second pressure line portion lies between a second of the pump ports and the second outlet for clutch cooling, and contains a check valve of the valve arrangement which blocks in the direction of the second pump port.

According to the invention, the connecting portion connects the second pressure line portion to the first pressure line portion, wherein the connecting portion, viewed from the pump, branches off the second pressure line portion upstream of the check valve of the second pressure line portion. If the connecting portion branch off the second pressure line portion between the check valve of the second pressure line portion and the second outlet for clutch cooling; this would lead to a series connection of similarly oriented check valves in the second pressure line portion and in the connecting portion, and hence to a greater flow resistance in the direction of the first outlet for the transmission lubrication, which is not preferred.

In a further suitable embodiment of the hydraulic device, the connecting portion, viewed from the pump, opens into the first pressure line portion downstream of the check valve of the first pressure line portion.

With the aim of a good possibility of adaptation to the respective installation conditions of the hydraulic device, it is furthermore preferred if the valve arrangement comprises a diaphragm between the check valve of the second pressure line portion and the second outlet for clutch cooling. A corresponding pressure adaptation for clutch cooling could indeed also be made at the second outlet or downstream of the second outlet of the hydraulic device by suitable dimensioning of the line cross-sections present here, but this is less preferred in particular because of the temperature influence on the flow resistance in longer lines.

It is particularly advantageous if, in a refinement of the hydraulic device, a heat exchanger is provided which, in operation of the motor vehicle, serves in particular to cool the hydraulic fluid, but in the starting phase or at the beginning of operation may also ensure that the hydraulic fluid rapidly reaches its operating temperature. Such a heat exchanger is preferably provided between the first pump port and the first outlet for transmission lubrication, in order thus to guarantee continuous tempering in the main path of the hydraulic fluid. It should be taken into account here that transmission lubrication must take place permanently while clutch cooling is to be provided only temporarily, namely on a gear change.

In this embodiment of the hydraulic device, the heat exchanger is preferably connected in series to a further check valve of the valve arrangement which is parallel to the check valve of the first pressure line portion which is preloaded in the closing direction by means of a spring that is dimensioned such that, when the hydraulic fluid is in a cold state, the opening pressure of the check valve is smaller than a pressure loss over the heat exchanger, whereas when the hydraulic fluid is in a warm state, the opening pressure of the check valve is greater than the pressure loss over the heat exchanger. Thus an adequate quantity of hydraulic fluid is always available for transmission lubrication, and in cold state reaches the first outlet for transmission lubrication in adequate amounts via the spring-preloaded check valve in the first pressure line portion, and in warm state reaches the first outlet for transmission lubrication suitably tempered via the heat exchanger. Advantageously therefore, at the transmission, an under-lubrication due to insufficient hydraulic fluid in a cold or too cold state, or due to too low a viscosity of the hydraulic fluid in a warm or too warm state, is reliably avoided.

In order not to have to impose high requirements for oil purity and to be able to avoid, as reliably as possible, blockages due to any oil contamination in the hydraulic device, it is furthermore preferred if the suction inlet is equipped with a filter.

In principle, a drive which is in any case present in the motor vehicle, in some cases with assigned clutch, may be used to drive the reversing pump insofar as the drive, where applicable with the aid of a suitable gear mechanism, also allows a reversal of rotation direction. However, an embodiment is preferred in which the pump can be driven by an electric motor which is in particular provided for this purpose. Thus a reversal in rotation direction of the pump can be achieved in a simple manner, i.e. - in the case of a DC motor - by simple reversal of the current direction in the armature winding or exciter winding.

In particular with a view to simple installation of the hydraulic device in the motor vehicle with little complexity of piping and wiring, and the possibility of being able to arrange the hydraulic device in the motor vehicle as far as possible independently of the location of the clutches and transmission, e.g. at a location which is better protected against external influences (temperature etc.), or more easily accessible and/or less constricted, it is furthermore preferred if the pump, the valve arrangement and the connecting portion with diaphragm and check valve are combined into a module on which at least the first outlet for transmission lubrication, the second outlet for clutch cooling, and the suction inlet for intake of hydraulic fluid from the storage container are formed. Such a module offers the advantage that it can be (pre-)tested and where applicable (pre-)programmed before installation in the motor vehicle. With the aim of the greatest possible integration of functions in the hydraulic device, it may furthermore be provided that the module also comprises the filter of the suction inlet and/or the electric motor for driving the pump and/or a power electronics for the electric motor. In addition, the module may also be provided with at least one port (outlet) for the heat exchanger which preferably sits outside the module.

Finally, the invention comprises the use of the hydraulic device described above for transmission lubrication and clutch cooling in a motor vehicle.

### BRIEF DESCRIPTION OF THE DRAWINGS

The invention is explained in more detail below with reference to preferred exemplary embodiments shown on the attached diagrammatic drawings, wherein the same or equivalent parts carry the same reference signs, where applicable with an apostrophe (') to identify the second exemplary embodiment. The drawings show:

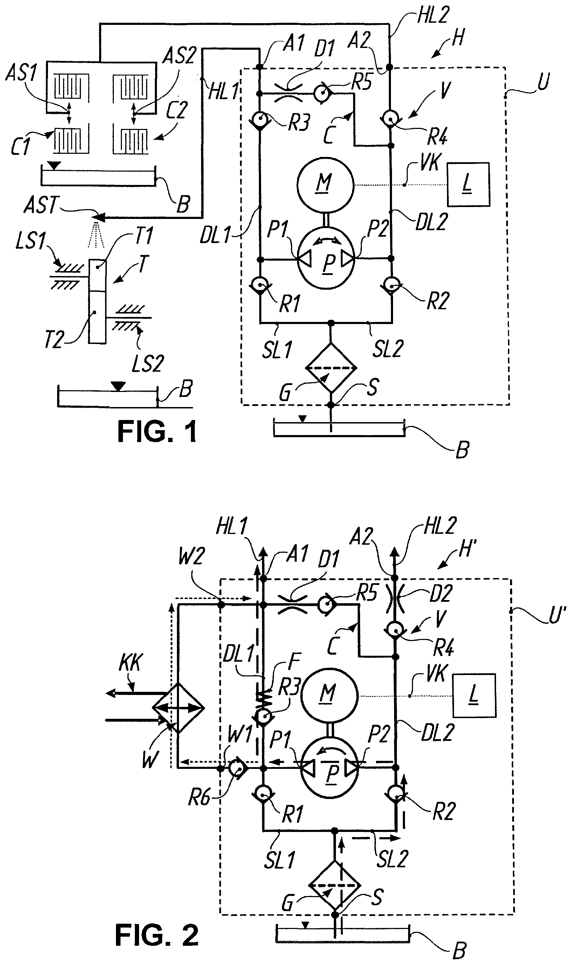

- Fig. 1: a circuit diagram of a hydraulic device for transmission lubrication and clutch cooling for a motor vehicle as a first exemplary embodiment according to the invention, which is hydraulically connected between a transmission, two clutches and a storage container for hydraulic fluid, which are depicted merely diagrammatically in figure 1;
- Fig. 2: a circuit diagram of a hydraulic device for transmission lubrication and clutch cooling for a motor vehicle as a second exemplary embodiment according to the invention, without diagrammatic depiction of the transmission and clutches according to figure 1, and in which furthermore, in contrast to figure 1, in particular a heat exchanger is also provided for cooling or heating the hydraulic fluid, wherein dotted lines depict the flow path of the hydraulic fluid in the cold state, as occurs on operation of the device for transmission lubrication alone without clutch cooling;

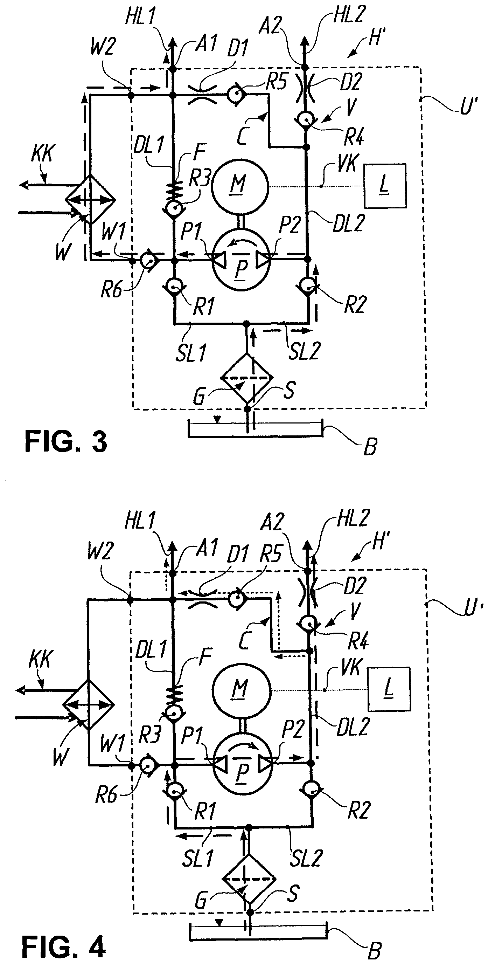

- Fig. 3: a circuit diagram corresponding to figure 2 for the second exemplary embodiment of the hydraulic device, wherein dotted lines depict the flow path of the hydraulic fluid in warm state, as occurs on operation of the device for transmission lubrication alone without clutch cooling; and
- Fig. 4: a further circuit diagram corresponding to figure 2 for the second exemplary embodiment of the hydraulic device, wherein dotted lines depict the flow path of the hydraulic fluid, as occurs on operation of the device for combined clutch cooling and transmission lubrication.

The drawings and the description below do not contain a detailed presentation or explanation of the lubrication points in the transmission and the cooling points on the wet clutches since these elements and their functions are adequately known to the person skilled in the art, and statements relating thereto are not necessary for the understanding of the present invention.

### DETAILED DESCRIPTION OF EXEMPLARY EMBODIMENTS

In figure 1, reference sign H generally designates a hydraulic device for transmission lubrication and clutch cooling for a motor vehicle. A transmission T, which may e.g. be an automatic transmission, is depicted merely diagrammatically as a pair of gearwheels T1, T2 to be lubricated which are mounted rotatably at bearing points LS1, LS2 in a transmission casing (not shown). On the clutch side, as an example two wet (partial) clutches C1, C2 of a dual clutch device are shown, which is assigned to the automatic transmission T. As known in itself, in the event of a gear change, the one partial clutch C1 of the dual clutch device on the automatic transmission T opens while the other partial clutch C2 of the dual clutch device closes, so that on a gear change, the two partial clutches C1, C2 always produce common heat. To this extent, parallel-connected coolant outlet points AS1, AS2 are assigned to the partial clutches C1, C2 of the dual clutch device.

The hydraulic device H for transmission lubrication and clutch cooling now generally comprises a pump P having two pump ports P1, P2 for conveying a hydraulic fluid (namely oil as a liquid lubricant and coolant), a suction inlet S for drawing in the hydraulic fluid from a storage container B, a first outlet A1 for the output of hydraulic fluid for lubricating the automatic transmission T, and a second outlet A2 for the output of hydraulic fluid for cooling the clutches C1, C2. Furthermore, a valve arrangement, generally designated with reference sign V, is provided for conducting the hydraulic fluid from the suction inlet S to the outlets A1, A2 of the hydraulic device H.

The first outlet A1 is here hydraulically connected via a first hydraulic line HL1 to one (or more) lubricant outlet points AST for the automatic transmission T, while a hydraulic connection exists between the second outlet A2 and the parallel-connected coolant outlet points AS1, AS2 for the partial clutches C1, C2 of the dual clutch device via a second hydraulic line HL2, which branches into two partial portions upstream of the coolant outlet points AS1, AS2.

It is essential for the hydraulic device H that the pump P is configured as a reversing pump, so that depending on rotation direction of the reversing pump P, the one pump port P1 or P2 lies on the suction side and the other pump port P2 or P1 lies on the pressure side, wherein the valve arrangement V comprises at least four check valves R1, R2, R3, R4 which are connected between the pump ports P1, P2, the suction inlet S and the outlets A1, A2 such that hydraulic fluid can only be drawn in via the suction inlet S on the suction side and output on the pressure side only in the direction of outlets A1, A2. Here furthermore, the outlets A1 and A2 are hydraulically connected by means of a connecting portion C which contains a diaphragm D1 and a check valve R5 which blocks in the direction of the second outlet A2 for clutch cooling, so that depending on rotation direction of the reversing pump P, transmission lubrication or combined clutch cooling and transmission lubrication takes place.

In the exemplary embodiment shown, the reversing pump P has its own drive in the form of an electric motor M. Suitable pump types for the reversing pump P are e.g. gear pumps, roller cell pumps, vane cell pumps, and radial or axial piston pumps. For the present application, it is sufficient if the reversing pump P is configured as a constant pump which supplies a constant volume flow for a predefined rotation speed of the electric motor M. Preferably, the rotation speed of the electric motor M can be controlled in order to be able to output variable quantities of hydraulic fluid according to the respective lubrication or cooling needs. The electric motor M is powered or actuated via the supply cable VK (drawn in dotted lines in figure 1) which is electrically connected to an electronics unit L (power electronics). The latter is in turn electrically connected to a higher-level control unit (not shown); the same applies in the known fashion for the electrical sensors and actuators of the automatic transmission T and the assigned dual clutch device.

To achieve the abovementioned functionality of conducting the hydraulic fluid through the hydraulic device H, the reversing pump P is connected to check valves R1, R2, R3, R4 of the valve arrangement V as follows. Firstly, in the exemplary embodiment shown, a respective suction line portion SL1, SL2 lies between the suction inlet S of the hydraulic device H at which a filter G is provided, and each of the pump ports P1, P2 of the reversing pump P, and contains a check valve R1, R2 of the valve arrangement V which blocks in the direction of the suction inlet S. Furthermore, a first pressure line portion DL1 is arranged between a first (P1) of the pump ports P1, P2 of the reversing pump P and the first outlet A1 for transmission lubrication, and contains the check valve R3 of the valve arrangement V which blocks in the direction of the first pump port P1. In addition, a second pressure line portion DL2 is arranged between a second (P2) of the pump ports P1, P2 of the reversing pump P and the second outlet A2 for clutch cooling, and contains the check valve R4 of the valve arrangement V which blocks in the direction of the second pump port P2.

Furthermore, the connecting portion C connects the second pressure line portion DL2 to the first pressure line portion DL1. Here, viewed from the reversing pump P, the connecting portion C branches from the second pressure line portion DL2 upstream of the check valve R4 of the second pressure line portion DL2. On the other side, the connecting portion C - again viewed from the reversing pump P - opens into the first pressure line portion DL1 downstream of the check valve R3 of the first pressure line portion DL1.

Figure 1 finally indicates in dotted lines that the reversing pump P, the valve arrangement V and the connecting portion C with diaphragm D1 and check valve R5 may, in a manner highly favourable for installation, be combined into a module U at which the first outlet A1 for transmission lubrication, the second outlet A2 for clutch cooling and the suction inlet S for drawing in the hydraulic fluid from the storage container B are formed. In the exemplary embodiment shown, the module U furthermore comprises the filter G of the suction inlet S, the electric motor M for driving the reversing pump P, and the power electronics L for the electric motor M.

The function of the hydraulic device H described above is as follows. If solely lubrication of the automatic transmission T is required, the higher-level control unit (not shown) actuates the electric motor M via the electronics L such that it drives the reversing pump P counterclockwise in figure 1. Accordingly, the reversing pump P draws in hydraulic fluid from the storage container B via the second pump port P2, the suction line portion SL2, the opened check valve R2 therein, the filter G and the suction inlet S. The check valve R4 in the pressure line portion DL2 and the check valve R5 in the connecting portion C here close and prevent hydraulic fluid from being sucked out of the pressure line portion DL2 or the connecting portion C.

On the pressure side of the reversing pump P, the reversing pump P conveys the hydraulic fluid from the first pump port P1 into the pressure line portion DL1 via the opened check valve R3 to the outlet A1 for lubricating the automatic transmission T. Here, the check valve R1 in the suction line portion SL1 closes and prevents the reversing pump P from conveying the hydraulic fluid directly back into the storage container B. Similarly, the check valve R5 in the connecting portion C prevents the hydraulic fluid from being pushed into the pressure line portion DL2. The hydraulic fluid is conveyed from the outlet A1 to the lubricant outlet point AST via the hydraulic line HL1. The hydraulic fluid which drips from the lubricant outlet point AST over the gearwheels T2, T2 of the automatic transmission T is returned to the storage container B in the known fashion (collector on transmission, possibly return pump).

If however combined clutch cooling at the partial clutches C1, C2 and transmission lubrication at the automatic transmission T is required, the control unit actuates the electric motor M via the electronics L such that the reversing pump P is driven clockwise in figure 1. The reversing pump P now sucks hydraulic fluid from the storage container B via the first pump port P1, the suction line portion SL1, the opened check valve R1 therein, the filter G and the suction inlet S. Here, the check valve R3 in the pressure line portion DL1 closes and prevents the hydraulic fluid from being sucked out of the pressure line portion DL1.

On the pressure side, the reversing pump P conveys the hydraulic fluid from the second pump port P2 into the pressure line portion DL2. Here, the delivered volume flow is divided, namely into a first partial volume flow which passes via the opened check valve R4 to the outlet A2 for cooling the partial clutches C1, C2, and a second partial volume flow which is conducted via the opened check valve R5 and the choke D1 in the connecting portion C to the outlet A1 for transmission lubrication. Here, the check valve R2 in the suction line portion SL2 closes and prevents the reversing pump P from conveying the hydraulic fluid directly back into the storage container B. The hydraulic fluid conducted to the coolant outlet points AS1, AS2 via the hydraulic line HL2 then drips over the partial clutches C1, C2 of the dual clutch device and, again, is returned to the storage container B in a known fashion.

As a result, in operation of the reversing pump P, lubrication of the automatic transmission T always takes place, and optionally, depending on rotation direction of the reversing pump P, cooling of the partial clutches C1, C2 if required in the event of a gear change ("on demand"). Typically, on such a gear change, the clutch cooling lasts between 20 and 40 seconds. By suitably controlling the rotation speed of the electric motor M for driving the reversing pump P, it is possible to constantly maintain the quantity of hydraulic fluid required for lubricating the automatic transmission T independently of the rotation direction of the reversing pump P if this is necessary or desirable. In other words, in the case of only lubrication of the automatic transmission T via the outlet A1, the reversing pump P may be driven more slowly, and in the case of combined transmission lubrication and clutch cooling via outlets A1 and A2, it may be driven more quickly; thus in the combined case, the quantity of hydraulic fluid delivered via the outlet A1 corresponds to the quantity of hydraulic fluid which is output via the outlet A1 on transmission lubrication alone.

With reference to figures 2 to 4, the second exemplary embodiment will be described below only to the extent to which it differs from the first exemplary embodiment described with reference to figure 1. On the suction side of the reversing pump P in the hydraulic device H' according to the second exemplary embodiment, there are no differences from the hydraulic device H according to the first exemplary embodiment, but there are differences on the pressure side of the reversing pump P.

On the pressure side of the reversing pump P, the valve arrangement V of the hydraulic device H' according to the second exemplary embodiment firstly also has a diaphragm D2 between the check valve R4 of the second pressure line portion DL2 and the second outlet A2 for clutch cooling. The diaphragm D2 allows a pressure adaptation on the side of the hydraulic device H' for the clutch cooling, which is advantageous with regard to a good possibility of adaptation to the respective installation conditions of the hydraulic device H'. Furthermore, in the second exemplary embodiment of the hydraulic device H', a heat exchanger W is provided which serves in particular for cooling the hydraulic fluid. The heat exchanger W may be configured in a contraflow, synchronous flow or crossflow design, and for example be connected to a water cooling circuit of the motor vehicle which is indicated with reference sign KK in figures 2 to 4.

In the exemplary embodiment shown, on the side of the hydraulic device H', the heat exchanger W is connected to the first pressure line portion DL1 between the first pump port P1 and the first outlet A1 for transmission lubrication. In comparison with the second pressure line portion DL2, the first pressure line portion DL1 is used more frequently (continuous transmission lubrication versus clutch cooling only on demand). To this end, the module U' also comprises at least one, in the exemplary embodiment shown two, ports W1, W2 for the heat exchanger W.

According to figures 2 to 4, the heat exchanger W is furthermore connected in series to a further check valve R6 of the valve arrangement V, parallel to the check valve R3 of the first pressure line portion DL1. Here, the check valve R3 of the first pressure line portion DL1 is preloaded by means of a spring F which is dimensioned such that when the hydraulic fluid is in a cold state, the opening pressure of the check valve R3 is smaller than a pressure loss over the heat exchanger W, whereas when the hydraulic fluid is in a warm state, the opening pressure of the check valve R3 is greater than the pressure loss over the heat exchanger W.

With regard to the function of the hydraulic device H', figures 2 to 4 illustrate different operating phases of this exemplary embodiment, wherein the respective throughflow of hydraulic fluid is indicated with dotted lines.

Figure 2 firstly illustrates lubrication of the automatic transmission T alone via the outlet A1 when the hydraulic fluid is in a cold state. The reversing pump P is here driven counter-clockwise in figure 2 via the electric motor M (see arrow in figure 2). Because of the temperature-induced high viscosity of the hydraulic fluid, the pressure loss over the heat exchanger W is greater than the opening pressure of the check valve R3, preloaded by the spring F, in the first pressure line portion DL1. Accordingly, the main flow of hydraulic fluid flows from the first pump port P1 through the first pressure line portion DL1 to the outlet A1 via the check valve R3 which is pressed open against the force of the spring F. A smaller part of the hydraulic fluid passes through the opened check valve R6 to the outlet A1 via the heat exchanger W. As a result, the hydraulic fluid heats up quickly.

Figure 3 then shows lubrication of the automatic transmission T alone via the outlet A1 when the hydraulic fluid is in a warm state. The reversing pump P is again driven counterclockwise in figure 3 via the electric motor M (see arrow in figure 3). Because of the temperature-induced low viscosity of the hydraulic fluid, the pressure loss over the heat exchanger W is smaller than the opening pressure of the spring-preloaded check valve R3 in the first pressure line portion DL1. Accordingly, the hydraulic fluid conveyed by the reversing pump P flows completely through the opened check valve R6 to the outlet A1 via the heat exchanger W. Here, an effective cooling or tempering of the hydraulic fluid by means of the heat exchanger W takes place.

Figure 4 finally illustrates the combined transmission lubrication and clutch cooling in the second exemplary embodiment of the hydraulic device H'. The reversing pump P is here driven clockwise in figure 4 by the electric motor M (see arrow in figure 4). The conveyed volume flow is divided in the second pressure line portion DL2, as already described with reference to figure 1, namely into a first partial volume flow which passes via the opened check valve R4 and the diaphragm D2 to the outlet A2 for cooling the partial clutches C1, C2 of the dual clutch device, and a second partial volume flow which passes via the opened check valve R5 and the choke D1 in the connecting portion C to the outlet A1 for lubricating the automatic transmission T. Here, the check valve R6 upstream of the port W1 for the heat exchanger W closes and prevents the reversing pump P from drawing hydraulic fluid out of the heat exchanger W - and hence from outlet A1 - via the first pump port P1.

Although the use of the hydraulic device H, H' for lubricating an automatic transmission T and for cooling the partial clutches C1, C2 of an assigned dual clutch device has been described above, the use of the hydraulic device H, H' is naturally not restricted thereto. Rather, the hydraulic device H, H' may be used independently of the design of transmission and the number of assigned clutches when it is necessary to implement a continuous transmission lubrication with clutch cooling only on demand as economically and energy-efficiently as possible, either in a conventionally driven motor vehicle or in a motor vehicle with hybrid drive.

A hydraulic device for transmission lubrication and clutch cooling comprises a reversing pump in which, depending on rotation direction of the pump, one of two pump ports lies on the suction side and the other pump port lies on the pressure side, with a suction inlet for drawing in a hydraulic fluid from a storage container, a first outlet for hydraulic fluid for transmission lubrication and a second outlet for hydraulic fluid for clutch cooling. To conduct the hydraulic fluid from the suction inlet to the outlets, a valve arrangement is provided with at least four check valves which are arranged between the pump ports, the suction inlet and the outlets such that the hydraulic fluid can only be drawn in via the suction inlet on the suction side and can only be output on the pressure side in the direction of the outlets. Furthermore, the outlets are hydraulically connected by means of a connecting portion with a diaphragm and a check valve which blocks in the direction of the second outlet, so that depending on the rotation direction of the pump, transmission lubrication or combined clutch cooling and transmission lubrication takes place.

### LIST OF REFERENCE SIGNS

- A1: First outlet (for transmission lubrication)
- A2: Second outlet (for clutch cooling)
- AS1: Coolant outlet point (for C1)
- AS2: Coolant outlet point (for C2)
- AST: Lubricant outlet point (for T)
- B: Storage container
- C: Connecting portion
- C1: First (partial) clutch
- C2: Second (partial) clutch
- D1: Diaphragm
- D2: Diaphragm
- DL1: First pressure line portion
- DL2: Second pressure line portion
- F: Spring
- G: Filter
- H, H': Hydraulic device
- HL1: Hydraulic line
- HL2: Hydraulic line
- KK: Coolant circuit
- L: Power electronics
- LS1: Bearing point
- LS2: Bearing point
- M: Electric motor
- P: Pump
- P1: First pump port
- P2: Second pump port
- R1: Check valve
- R2: Check valve
- R3: Check valve
- R4: Check valve
- R5: Check valve
- R6: Check valve
- S: Suction inlet
- SL1: Suction line portion
- SL2: Suction line portion
- T: Transmission/automatic transmission
- T1: Gearwheel
- T2: Gearwheel
- U, U': Module
- V: Valve arrangement
- VK: Supply cable
- W: Heat exchanger
- W1: Port (for heat exchanger)
- W2: Port (for heat exchanger)

## Claims

1. Hydraulic device (H, H') for transmission lubrication and clutch cooling in a motor vehicle, with a pump (P) having two pump ports (P1, P2) for conveying a hydraulic fluid, a suction inlet (S) for drawing in the hydraulic fluid from a storage container (B), a first outlet (A1) for the output of hydraulic fluid for transmission lubrication, a second outlet (A2) for the output of hydraulic fluid for clutch cooling, and a valve arrangement (V) for conducting the hydraulic fluid from the suction inlet (S) to the outlets (A1, A2), the pump (P) is configured as a reversing pump so that depending on the rotation direction of the pump (P), the one pump port (P1; P2) lies on the suction side and the other pump port (P2; P1) lies on the pressure side, wherein the valve arrangement (V) comprises at least four check valves (R1, R2, R3, R4) which are arranged between the pump ports (P1, P2), the suction inlet (S) and the outlets (A1, A2) such that the hydraulic fluid can only be drawn in via the suction inlet (S) on the suction side and can only be output on the pressure side in the direction of the outlets (A1, A2), wherein the outlets (A1, A2) are hydraulically connected by means of a connecting portion (C) having a diaphragm (D1) and a check valve (R5) which blocks in the direction of the second outlet (A2), so that depending on the rotation direction of the pump (P), transmission lubrication or combined clutch cooling and transmission lubrication takes place, wherein a first pressure line portion (DL1) lies between a first (P1) of the pump ports (P1, P2) and the first outlet (A1) for transmission lubrication, and contains a check valve (R3) of the valve arrangement (V) which blocks in the direction of the first pump port (P1), wherein a second pressure line portion (DL2) lies between a second (P2) of the pump ports (P1, P2) and the second outlet (A2) for clutch cooling, and contains a check valve (R4) of the valve arrangement (V) which blocks in the direction of the second pump port (P2), **characterized in that** the connecting portion (C) connects the second pressure line portion (DL2) to the first pressure line portion (DL1), wherein the connecting portion (C), viewed from the pump (P), branches off the second pressure line portion (DL2) upstream of the check valve (R4) of the second pressure line portion (DL2).

2. Hydraulic device (H, H') according to claim 1, **characterized in that** a respective suction line portion (SL1, SL2) lies between the suction inlet (S) and each of the pump ports (P1, P2), and contains a check valve (R1, R2) of the valve arrangement (V) which blocks in the direction of the suction inlet (S).

3. Hydraulic device (H, H') according to claim 1 or 2, **characterized in that** the connecting portion (C), viewed from the pump (P), opens into the first pressure line portion (DL1) downstream of the check valve of the first pressure line portion (DL1).

4. Hydraulic device (H') according to any of the preceding claims, **characterized in that** the valve arrangement (V) comprises a diaphragm (D2) between the check valve (R4) of the second pressure line portion (DL2) and the second outlet (A2) for clutch cooling.

5. Hydraulic device (H') according to any of the preceding claims, **characterized by** a heat exchanger (W), in particular for cooling the hydraulic fluid, which is preferably provided between the first pump port (P1) and the first outlet (A1) for transmission lubrication.

6. Hydraulic device (H') according to claim 5, **characterized in that** the heat exchanger (W) is connected in series to a further check valve (R6) of the valve arrangement (V) which is parallel to the check valve (R3) of the first pressure line portion (DL1) which is preloaded by means of a spring (F) that is dimensioned such that, when the hydraulic fluid is in a cold state, the opening pressure of the check valve (R3) is smaller than a pressure loss over the heat exchanger (W), whereas when the hydraulic fluid is in a warm state, the opening pressure of the check valve (R3) is greater than the pressure loss over the heat exchanger (W).

7. Hydraulic device (H, H') according to any of the preceding claims, **characterized in that** the suction inlet (S) is equipped with a filter (G).

8. Hydraulic device (H, H') according to any of the preceding claims, **characterized in that** the pump (P) can be driven by an electric motor (M).

9. Hydraulic device (H, H') according to any of the preceding claims, **characterized in that** the pump (P), the valve arrangement (V) and the connecting portion (C) with diaphragm (D1) and check valve (R5) are combined into a module (U, U') on which at least the first outlet (A1) for transmission lubrication, the second outlet (A2) for clutch cooling, and the suction inlet (S) for intake of hydraulic fluid from the storage container (B) are formed.

10. Hydraulic device (H, H') according to claim 9 insofar as referring back at least to claim 7 and/or 8, **characterized in that** the module (U, U') also comprises the filter (G) of the suction inlet (S) and/or the electric motor (M) for driving the pump (P) and/or a power electronics (L) for the electric motor (M) .

11. Hydraulic device (H') according to claim 9 or 10 insofar as referring back at least to claim 5, **characterized in that** the module (U') is also provided with at least one port (W1, W2) for the heat exchanger (W).

12. Use of a hydraulic device (H, H') according to any of the preceding claims for transmission lubrication and clutch cooling in a motor vehicle.

## Patentansprüche

1. Hydraulische Vorrichtung (H, H') zur Getriebeschmierung und Kupplungskühlung in einem Kraftfahrzeug, mit einer Pumpe (P), die zwei Pumpenanschlüsse (P1, P2) zum Fördern eines Hydraulikfluids, einen Saugeinlass (S) zum Einziehen des Hydraulikfluids aus einem Speicherbehälter (B), einen ersten Auslass (A1) für die Ausgabe von Hydraulikfluid zur Getriebeschmierung, einen zweiten Auslass (A2) für den Ausgabe von Hydraulikfluid zur Kupplungskühlung und eine Ventilanordnung (V) zum Leiten des Hydraulikfluids von dem Saugeinlass (S) zu den Auslässen (A1, A2) aufweist, wobei die Pumpe (P) als eine Reversierpumpe ausgestaltet ist, so dass abhängig von der Drehrichtung der Pumpe (P) der eine Pumpenanschluss (P1; P2) auf der Saugseite liegt und der andere Pumpenanschluss (P2; P1) auf der Druckseite liegt, wobei die Ventilanordnung (V) mindestens vier Rückschlagventile (R1, R2, R3, R4) umfasst, die zwischen den Pumpenanschlüssen (P1, P2), dem Saugeinlass (S) und den Auslässen (A1, A2) derart angeordnet sind, dass das Hydraulikfluid nur über den Saugeinlass (S) auf der Saugseite eingezogen werden kann und nur auf der Druckseite in die Richtung der Auslässe (A1, A2) ausgegeben werden kann, wobei die Auslässe (A1, A2) mittels eines Verbindungsabschnitts (C) hydraulisch verbunden sind, der eine Membran (D1) und ein Rückschlagventil (R5) aufweist, das in der Richtung des zweiten Auslasses (A2) sperrt, so dass abhängig von der Drehrichtung der Pumpe (P) eine Getriebeschmierung oder eine kombinierte Kupplungskühlung und Getriebeschmierung stattfindet, wobei ein erster Druckleitungsabschnitt (DL1) zwischen einem ersten (P1) der Pumpenanschlüsse (P1, P2) und dem ersten Auslass (A1) zur Getriebeschmierung liegt und ein Rückschlagventil (R3) der Ventilanordnung (V) enthält, das in der Richtung des ersten Pumpenanschlusses (P1) sperrt, wobei ein zweiter Druckleitungsabschnitt (DL2) zwischen einem zweiten (P2) der Pumpenanschlüsse (P1, P2) und dem zweiten Auslass (A2) zur Kupplungskühlung liegt und ein Rückschlagventil (R4) der Ventilanordnung (V) enthält, das in der Richtung des zweiten Pumpenanschlusses (P2) sperrt, **dadurch gekennzeichnet, dass** der Verbindungsabschnitt (C) den zweiten Druckleitungsabschnitt (DL2) mit dem ersten Druckleitungsabschnitt (DL1) verbindet, wobei der Verbindungsabschnitt (C) bei Ansicht von der Pumpe (P) den zweiten Druckleitungsabschnitt (DL2) stromaufwärts des Rückschlagventils (R4) des zweiten Druckleitungsabschnitts (DL2) abzweigt.

2. Hydraulische Vorrichtung (H, H') nach Anspruch 1, **dadurch gekennzeichnet, dass** ein jeweiliger Saugleitungsabschnitt (SL1, SL2) zwischen dem Saugeinlass (S) und jedem der Pumpenanschlüsse (P1, P2) liegt und ein Rückschlagventil (R1, R2) der Ventilanordnung (V) enthält, das in der Richtung des Saugeinlasses (S) sperrt.

3. Hydraulische Vorrichtung (H, H') nach Anspruch 1 oder 2, **dadurch gekennzeichnet, dass** sich der Verbindungsabschnitt (C) bei Ansicht von der Pumpe (P) in den ersten Druckleitungsabschnitt (DL1) stromabwärts des Rückschlagventils des ersten Druckleitungsabschnitts (DL1) öffnet.

4. Hydraulische Vorrichtung (H') nach einem der vorhergehenden Ansprüche, **dadurch gekennzeichnet, dass** die Ventilanordnung (V) eine Membran (D2) zwischen dem Rückschlagventil (R4) des zweiten Druckleitungsabschnitts (DL2) und dem zweiten Auslass (A2) zur Kupplungskühlung umfasst.

5. Hydraulische Vorrichtung (H') nach einem der vorhergehenden Ansprüche, **gekennzeichnet durch** einen Wärmetauscher (W), insbesondere zum Kühlen des Hydraulikfluids, der vorzugsweise zwischen dem ersten Pumpenanschluss (P1) und dem ersten Auslass (A1) zur Getriebeschmierung bereitgestellt ist.

6. Hydraulische Vorrichtung (H') nach Anspruch 5, **dadurch gekennzeichnet, dass** der Wärmetauscher (W) in Reihe mit einem weiteren Rückschlagventil (R6) der Ventilanordnung (V) verbunden ist, das parallel zu dem Rückschlagventil (R3) des ersten Druckleitungsabschnitts (DL1) ist, das mittels einer Feder (F) vorgespannt ist, die derart dimensioniert ist, dass, wenn das Hydraulikfluid in einem kalten Zustand ist, der Öffnungsdruck des Rückschlagventils (R3) kleiner als ein Druckverlust über den Wärmetauscher (W) ist, wobei, wenn das Hydraulikfluid in einem warmen Zustand ist, der Öffnungsdruck des Rückschlagventils (R3) größer als der Druckverlust über den Wärmetauscher (W) ist.

7. Hydraulische Vorrichtung (H, H') nach einem der vorhergehenden Ansprüche, **dadurch gekennzeichnet, dass** der Saugeinlass (S) mit einem Filter (G) ausgestattet ist.

8. Hydraulische Vorrichtung (H, H') nach einem der vorhergehenden Ansprüche, **dadurch gekennzeichnet, dass** die Pumpe (P) durch einen Elektromotor (M) angetrieben werden kann.

9. Hydraulische Vorrichtung (H, H') nach einem der vorhergehenden Ansprüche, **dadurch gekennzeichnet, dass** die Pumpe (P), die Ventilanordnung (V) und der Verbindungsabschnitt (C) mit der Membran (D1) und dem Rückschlagventil (R5) in ein Modul (U, U') zusammengefasst sind, an dem mindestens der erste Auslass (A1) zur Getriebeschmierung, der zweite Auslass (A2) zur Kupplungskühlung und der Saugeinlass (S) zum Einziehen des Hydraulikfluids aus einem Speicherbehälter (B) ausgebildet sind.

10. Hydraulische Vorrichtung (H, H') nach Anspruch 9, sofern rückbezogen mindestens auf Anspruch 7 und/oder Anspruch 8, **dadurch gekennzeichnet, dass** das Modul (U, U') zudem den Filter (G) des Saugeinlasses (S) und/oder den Elektromotor (M) zum Antreiben der Pumpe (P) und/oder eine Leistungselektronik (L) für den Elektromotor (M) umfasst.

11. Hydraulische Vorrichtung (H') nach Anspruch 9 oder 10, sofern rückbezogen mindestens auf Anspruch 5, **dadurch gekennzeichnet, dass** das Modul (U') zudem mit mindestens einem Anschluss (W1, W2) für den Wärmetauscher (W) versehen ist.

12. Verwendung einer hydraulischen Vorrichtung (H, H') nach einem der vorhergehenden Ansprüche zur Getriebeschmierung und Kupplungskühlung in einem Kraftfahrzeug.

## Revendications

1. Dispositif hydraulique (H, H') pour la lubrification de transmission et le refroidissement d'embrayage dans un véhicule automobile, comprenant une pompe (P) présentant deux orifices de pompe (P1, P2) servant à transporter un fluide hydraulique, une entrée d'aspiration (S) servant à prélever le fluide hydraulique d'un récipient de stockage (B), une première sortie (A1) pour la sortie de fluide hydraulique pour la lubrification de transmission, une deuxième sortie (A2) pour la sortie de fluide hydraulique pour le refroidissement d'embrayage, et un agencement de clapets (V) servant à conduire le fluide hydraulique de l'entrée d'aspiration (S) aux sorties (A1, A2), la pompe (P) étant configurée sous forme de pompe réversible de sorte qu'en fonction du sens de rotation de la pompe (P), ledit un orifice de pompe (P1 ; P2) se trouve du côté aspiration et l'autre orifice de pompe (P2 ; P1) se trouve du côté pression, l'agencement de clapets (V) comprenant au moins quatre clapets antiretour (R1, R2, R3, R4) qui sont agencés entre les orifices de pompe (P1, P2), l'entrée d'aspiration (S) et les sorties (A1, A2) de sorte que le fluide hydraulique ne peut être prélevé que par l'intermédiaire de l'entrée d'aspiration (S) sur le côté aspiration et ne peut être sorti que sur le côté pression dans la direction des sorties (A1, A2), les sorties (A1, A2) étant raccordées hydrauliquement au moyen d'une partie de raccordement (C) présentant une membrane (D1) et un clapet antiretour (R5) qui se bloque dans la direction de la deuxième sortie (A2) de sorte qu'en fonction du sens de rotation de la pompe (P), la lubrification de transmission ou un refroidissement d'embrayage et une lubrification de transmission combinés ont lieu, une première partie de conduite sous pression (DL1) se trouvant entre un premier (P1) des orifices de pompe (P1, P2) et la première sortie (A1) pour la lubrification de transmission, et contient un clapet antiretour (R3) de l'agencement de clapets (V) qui se bloque dans la direction du premier orifice de pompe (P1), une deuxième partie de conduite sous pression (DL2) se trouvant entre un deuxième (P2) des orifices de pompe (P1, P2) et la deuxième sortie (A2) pour le refroidissement d'embrayage, et contenant un clapet antiretour (R4) de l'agencement de clapets (V) qui se bloque dans la direction du deuxième orifice de pompe (P2),
**caractérisé en ce que** la partie de raccordement (C) raccorde la deuxième partie de conduite sous pression (DL2) à la première partie de conduite sous pression (DL1), la partie de raccordement (C), vue à partir de la pompe (P), bifurquant de la deuxième partie de conduite sous pression (DL2) en amont du clapet antiretour (R4) de la deuxième partie de conduite sous pression (DL2).

2. Dispositif hydraulique (H, H') selon la revendication 1, **caractérisé en ce qu'**une partie de conduite d'aspiration respective (SL1, SL2) se trouve entre l'entrée d'aspiration (S) et chacun des orifices de pompe (P1, P2), et contient un clapet antiretour (R1, R2) de l'agencement de clapets (V) qui se bloque dans la direction de l'entrée d'aspiration (S).

3. Dispositif hydraulique (H, H') selon la revendication 1 ou 2, **caractérisé en ce que** la partie de raccordement (C), vue à partir de la pompe (P), s'ouvre sur la première partie de conduite sous pression (DL1) en aval du clapet antiretour de la première partie de conduite sous pression (DL1).

4. Dispositif hydraulique (H') selon l'une quelconque des revendications précédentes, **caractérisé en ce que** l'agencement de clapets (V) comprend une membrane (D2) entre le clapet antiretour (R4) de la deuxième partie de conduite sous pression (DL2) et la deuxième sortie (A2) pour le refroidissement d'embrayage.

5. Dispositif hydraulique (H') selon l'une quelconque des revendications précédentes, **caractérisé par** un échangeur thermique (W), en particulier pour le refroidissement du fluide hydraulique, qui est de préférence prévu entre le premier orifice de pompe (P1) et la première sortie (A1) pour la lubrification de transmission.

6. Dispositif hydraulique (H') selon la revendication 5, **caractérisé en ce que** l'échangeur de chaleur (W) est raccordé en série avec un autre clapet antiretour (R6) de l'agencement de clapets (V) qui est parallèle au clapet antiretour (R3) de la première partie de conduite sous pression (DL1), qui est précontraint au moyen d'un ressort (F) qui est dimensionné de telle sorte que lorsque le fluide hydraulique est dans un état froid, la pression d'ouverture du clapet antiretour (R3) est inférieure à une perte de pression à travers l'échangeur thermique (W), tandis que lorsque le fluide hydraulique est dans un état chaud, la pression d'ouverture du clapet antiretour (R3) est supérieure à la perte de pression à travers l'échangeur thermique (W).

7. Dispositif hydraulique (H, H') selon l'une quelconque des revendications précédentes, **caractérisé en ce que** l'entrée d'aspiration (S) est équipée d'un filtre (G).

8. Dispositif hydraulique (H, H') selon l'une quelconque des revendications précédentes, **caractérisé en ce que** la pompe (P) peut être entraînée par un moteur électrique (M).

9. Dispositif hydraulique (H, H') selon l'une quelconque des revendications précédentes, **caractérisé en ce que** la pompe (P), l'agencement de clapets (V) et la partie de raccordement (C) avec la membrane (D1) et le clapet antiretour (R5) sont combinés en un module (U, U') sur lequel sont formées au moins la première sortie (A1) pour la lubrification de transmission, la deuxième sortie (A2) pour le refroidissement d'embrayage, et l'entrée d'aspiration (S) pour l'admission de fluide hydraulique à partir du récipient de stockage (B).

10. Dispositif hydraulique (H, H') selon la revendication 9 dans la mesure où elle se réfère au moins à la revendication 7 et/ou 8, **caractérisé en ce que** le module (U, U') comprend également le filtre (G) de l'entrée d'aspiration (S) et/ou le moteur électrique (M) pour entraîner la pompe (P) et/ou une électronique de puissance (L) pour le moteur électrique (M).

11. Dispositif hydraulique (H') selon la revendication 9 ou 10 dans la mesure où elles se réfèrent au moins à la revendication 5, **caractérisé en ce que** le module (U') est également pourvu d'au moins un orifice (Wl, W2) pour l'échangeur de chaleur (W).

12. Utilisation d'un dispositif hydraulique (H, H') selon l'une quelconque des revendications précédentes pour la lubrification de transmission et le refroidissement d'embrayage dans un véhicule automobile.
